# EUROPEAN PATENT SPECIFICATION

(11) **EP 2 654 413 B1**
(45) Date of publication and mention of the grant of the patent: **21.09.2016**
(21) Application number: 11819126.1
(22) Date of filing: 20.12.2011
(51) Int. Cl.: A01K 1/10, A01K 1/06

(54) **FEEDING FENCE ASSEMBLY**
FRESSGITTERANORDNUNG
ENSEMBLE BARRIÈRE POUR L'ALIMENTATION DU BÉTAIL

(30) Priority: 21.12.2010 NL 2005888
(43) Date of publication of application: 30.10.2013
(73) Proprietor: Weelink Participaties B.V., 9756 AJ Glimmen (NL)
(72) Inventor: WEELINK, Johannes Martinus Willibrordus, NL-9756 AJ Glimmen (NL)
(74) Representative: Mink-Lindenburg, Charlotte Hildegard
(86) International application number: PCT/NL2011/050868
(87) International publication number: WO 2012/087124

(56) References cited:
- WO-A1-02/41692
- NL-A- 9 401 505

## Description

### BACKGROUND OF THE INVENTION

The invention relates to a feeding fence assembly comprising a displaceable elongate frame, a feeding fence arranged on the frame and having a number of passage openings for the head of an animal. Such a feeding fence is known from European patent EP 0619068.

The known feeding fence further comprises support and guide means connected to the frame which support and guide the frame such that it can be displaced transversely of its longitudinal direction forward and backward through a stroke length over a floor surface, a mat of flexible material connected with a first longitudinal edge to the frame over the length of the feeding fence and connected with an opposite, second longitudinal edge to the floor, such that when the frame is in the fully advanced position the mat extends rearward from the frame. The stroke length which the frame can cover is limited by the width of the mat. According to embodiments of EP 0619068 the mat is rolled up on a shaft or folded beneath the frame in order to increase the stroke length. Rolling up the mat around a shaft has the drawback however that an upper side and an underside of the mat come into contact with each other, and can therefore contaminate each other. A drawback of the embodiment described in EP 0619068 in which the mat is folded is that, while the upper side and the underside of the mat do not touch each other, the stroke length is short.

The known feeding fence further comprises a drive for displacing the frame relative to fodder lying on a front side of the frame. A drawback of the known feeding fence assembly is that manual intervention is regularly required during the feeding of animals in order to place the feeding fence at an optimal distance relative to the fodder.

The known feeding fence is further provided with a self-catching feeding fence. In such a self-catching feeding fence the passage openings can be provided with a closing mechanism which can be set in an open position, in which the passage opening is substantially open so that the head of the animal can be placed therethrough, and in a closed position in which the passage opening is substantially closed. Such a self-catching feeding fence with closing mechanism is known from the European patent 0522665. A drawback of the known feeding fence is that the closing mechanism does not selectively close a passage opening; the passage opening is opened or closed for each animal. This results in a further drawback of the known feeding fence assemblies, i.e. that different portions of fodder placed in front of the feeding fence are usually not uniformly consumed by the animals.

It is an object of the invention to at least partially obviate at least one of the above stated drawbacks.

### SUMMARY OF THE INVENTION

The invention provides for this purpose a feeding fence assembly comprising a displaceable elongate frame, a feeding fence arranged on the frame and having a number of passage openings for the head of an animal, support and guide means connected to the frame which support and guide the frame such that it can be displaced transversely of its longitudinal direction forward and backward through a stroke length over a floor surface, a mat of flexible material which is connected with a first longitudinal edge to the frame over the length of the feeding fence and which mat is connected with an opposite, second longitudinal edge to the floor such that, when the frame is in fully advanced position, the mat extends rearward from the frame, wherein the mat in extended state has an underside facing toward the floor surface and an upper side facing away therefrom, wherein at least in the fully moved back position the mat is folded with at least two loops inside the frame.

A feeding fence assembly according to the preamble of claim 1 is known from WO02/41692.

A feeding fence assembly wherein a mat is folded back onto itself is known from NL9401505.

According to the invention when the mat is folded back onto itself, the mat is preferably intersected more than twice by an imaginary vertical plane through the mat. As a result of the folding-back a folded-back first part of the upper side of the mat is placed on or above another part of the upper side of the mat. The underside of the mat does not come into contact with the upper side of the mat. A possibly contaminated upper side of the mat thus remains facing away from and at a distance from the underside of the mat, whereby the upper side and the underside of the mat cannot contaminate each other. In addition, the upper side of the mat remains facing away from the floor surface. By unfolding the loops a greater stroke length is provided by a feeding fence assembly according to the invention than in the known prior art with the same size of frame, so that more fodder can be placed within a stroke length on the floor. Alternatively or additionally, the frame can take a smaller form while maintaining stroke length so that the frame takes up less floor space.

The feeding fence assembly according to the invention further comprises a supporting wall arranged inside the frame and having an upper side remote from the floor surface, wherein the upper side of the supporting wall is adapted to support the mat on the underside of the mat, in particular to support a loop of the mat. A loop of the mat is thus prevented from pressing a part of the mat located under the loop against the ground. Jamming of the frame is thus prevented.

In an embodiment the upper side of the supporting wall extends substantially parallel to the floor surface. In an alternative embodiment the upper side of the supporting wall does not extend substantially parallel to the floor surface but at an angle to the floor surface of preferably less than 30 degrees. The supporting wall preferably has an underside facing toward the floor surface and adapted to prevent bulging of mat parts lying thereunder, wherein this underside preferably extends parallel to the floor surface.

In an embodiment the supporting wall is arranged inside the frame at a rear side of the frame, The supporting wall is thus placed in an optimal position to support a loop sloping toward the rear side of the frame when the frame is placed in the moved back position or is in an at least partly moved back position.

In an embodiment the supporting wall lies, at least when the frame is in the fully moved back position, between two parts of the mat facing with their underside directly toward the supporting wall.

In an embodiment the feeding fence assembly is further provided with mat guiding means which are mounted on the frame and adapted to guide a loop of the mat away from the floor during displacement of the frame to the moved back position. The mat guiding means are preferably formed by one or more rollers disposed in the longitudinal direction of the frame and/or by a hollow retaining wall, the hollow side of which is directed toward the rear side of the frame. The mat guiding means are thus adapted to guide the mat in a loop, wherein the loop is preferably guided in the direction of the supporting wall in order to be supported thereby.

In an embodiment the mat guiding means are mounted inside the frame on a front side of the frame. During the movement of the frame to the moved back position the mat thus comes up against the mat guiding means on the front side of the frame, so that the mat is folded into a loop sloping to the rear over substantially the distance from the front side to the rear side of the frame.

In an embodiment a first part of the underside of the mat comes into contact with an opposite, second part of the underside of the mat when the frame is placed at least partially in the moved back position. The mat can thus be folded onto itself inside the frame in very compact manner, preferably into more than two loops. This applies particularly when loops of the mat or parts of these loops are supported by the supporting wall.

In an embodiment the feeding fence assembly further comprises a base which is fixedly connected to the floor and disposed on an end surface of the frame, wherein the support and guide means are connected movably to the base and wherein the frame is connected non-translatably to the support and guide means. The support and guide means, which are preferably embodied as a tube extending rearward transversely of the frame, are preferably received at least partly in the base for movement such that the support and guide means can move relative to the base along the stroke direction in order to guide the movement of the frame. The weight of the frame and the force which animals exert thereon is at least partially supported in this embodiment by the base and the support and guide means, irrespective of the position of the frame. The feeding fence assembly preferably comprises a base on both end surfaces.

In an embodiment the base is provided on its upper side with an end fence which also prevents animals being able to move along the side of the feeding fence assembly.

In an embodiment the base comprises a lower part in contact with the floor and a higher part extending rearward along the stroke direction and suspended substantially freely above the floor. The distance between the higher part and the floor is preferably such that an automatic manure scraper or manure robot can move under the higher part of the base over the floor, for instance 55 cm.

In an embodiment the support and guide means are mounted movably on the higher part of the base, wherein the support and guide means extend preferably substantially horizontally. The frame can thus move in stable manner because it is supported at a part remote from the floor as well as by the floor surface.

In an embodiment the support and guide means comprise a locking mechanism for engaging on the base in order to lock the frame in a position along the stroke length. This prevents the animals being able to push the frame too far forward, and a forward directed force on the frame can be absorbed substantially by the locking mechanism and the support and guide means. Alternatively, the base comprises a locking device for engaging on the support and guide means.

In an embodiment the feeding fence assembly further comprises a linear actuator for driving movement of the frame along the stroke length, which actuator is connected at an outer end to an underside of the frame and is connected at another outer end to a base fixedly connected to the floor, such that the linear actuator is oriented substantially diagonally relative to the floor. Because the linear actuator, for instance an electric screw cylinder, a hydraulic cylinder or an air cylinder, is connected to the base, the frame can be moved relative to the floor surface even when the floor surface is very slippery and/or contaminated. The support and guide means fixedly connected to the frame support the frame at a higher located part of the base, while the movement of the frame is driven on the underside, so preventing the frame coming to lie at an angle to the floor during movement.

In an embodiment the base comprises a lower part in contact with the floor and a higher part extending rearward along the stroke direction and suspended substantially freely above the floor, wherein the actuator is mounted such that it leaves substantially clear a passage under the higher part of the base. A manure robot or scraper can thus move under the freely suspended part both when the frame is in the moved back position and when the frame is in the advanced position, without coming into contact here with the actuator.

In an embodiment the frame is provided with a fodder detector adapted to detect fodder on the front side of the frame at a predetermined distance from the passage openings, wherein the feeding fence assembly further comprises a drive for displacing the frame relative to the feed, and a control device for controlling the drive for the purpose of driving movement of the frame on the basis of whether fodder has been detected at the predetermined distance from the feeding fence. As the fodder is consumed, the fodder is thus automatically moved closer to the feeding fence without human intervention being necessary. The frame is thus always placed at a position of the fodder which is optimal for the animals, this enhancing uniform consumption of the fodder. The pressure exerted on the frame by the animals is also smaller when there is enough fodder within reach.

A particularly suitable fodder detector comprises a rod which is connected to the frame on one side and lies against the fodder on another side, wherein a pressure with which the rod is pressed against the fodder indicates whether there is fodder within reach of the animals. The rod is preferably placed horizontally, wherein the side which lies against the fodder is rounded. The desired predetermined distance to the fodder can thus be adjusted in simple manner by shortening or lengthening the rod. Alternatively, the rod is mounted pivotally and a pivot angle the rod forms with the feeding fence is used to determine a distance from the feeding fence to the fodder, or known distance measuring means are used to estimate the distance to the fodder.

In an embodiment the frame is provided with a plurality of fodder detectors adapted to detect fodder on the front side of the frame at predetermined distances from the passage openings, wherein the control device is adapted to activate the drive when a predetermined percentage of the fodder detectors detects no fodder at the predetermined distance. A distance measuring means is preferably placed on the frame at every fourth passage opening and the control device is adapted to activate the drive when 75% or more of measured distances between passage openings and fodder is greater than the predetermined desired distance. In an embodiment suitable for cows this desired distance lies between 95 and 105 cm, wherein the desired distance is preferably 100 cm.

The fodder is preferably placed on the floor surface and the drive is adapted to move a displaceable frame as described above over the floor toward or away from the fodder. In an embodiment the drive is adapted to move the fodder toward or away from the frame, wherein the fodder moves relative to the floor. In this latter embodiment the fodder is preferably placed against and/or on a feeding wall displaceable transversely of the feeding fence, wherein the drive is adapted to drive movement of the feeding wall relative to the floor.

In an embodiment each of the passage openings is provided with a closing mechanism which can be set in an open position, in which it leaves the passage opening substantially open, and in a closed position in which it substantially closes the passage opening, and the feeding fence assembly further comprises animal recognition means which are coupled to a control device, wherein the animal recognition means are adapted to recognise animals at a distance from a passage opening, wherein the control device is adapted to control the closing mechanism at a passage opening for movement to the open or closed position on the basis of the animal recognized by the animal recognition means, before the recognized animal reaches the passage opening. Because an animal is recognized at a distance from the passage opening, access to this passage opening can be refused or allowed before the animal reaches the passage opening with its head. It is thus possible to adjust per animal at which passage openings an animal can eat. A diet can thus be set per animal by placing different types of fodder at different passage openings on the rear side of the feeding fence, i.e. a side of the feeding fence where the body of the animal is positioned. The animal recognition means are preferably adapted to recognize an animal at a predetermined distance, for instance at a distance of 60 cm from the passage opening.

The closing mechanism preferably comprises a bar which is pivotable in the passage opening and which is moved to the open or closed position by means of an air cylinder controlled by the control device. Such an air cylinder is preferably mounted in the feeding fence.

Examples of suitable animal recognition means are receivers which are adapted to recognize a signal from a transmitter, such as an RFID transmitter, which is arranged at the head of an animal, and cameras coupled to image recognition equipment with which animals can be recognized on the basis of their external characteristics.

In an embodiment the transmitter comprises an active transmitter which is powered by a rechargeable battery. This battery is preferably charged by means of induction and/or slide contacts when the animal places its head through the passage opening. The transmitter and battery are attached to a collar of an animal.

In an embodiment the animal recognition means comprise a first receiver and a second receiver which are mounted fixedly on the frame and adapted to receive an identification signal coming from a transmitter attached to the head of an animal, wherein the first receiver and the second receiver are arranged on a rear side of the frame at a distance from the passage opening and on either side thereof such that an animal must move between the first and second receiver in order to reach the passage opening. Owing to the use of two receivers, which are preferably disposed parallel to the feeding fence, it is possible to determine an orientation of the animal so that recognizing animals which do move past the animal recognition means, but not transversely of the direction of the feeding fence, does not result in the closing mechanism opening or closing a passage opening. At least another further animal recognition means is preferably also arranged at the passage opening so that a direction of movement of the animal can also be determined; when an animal is first recognized at the animal recognition means and subsequently at the further animal recognition means, the animal has then moved toward the passage opening and, when an animal is recognized by the animal recognition means after being recognized at the further animal recognition means, the animal has then moved away from the passage opening.

In an embodiment the feeding fence comprises on either side of each passage opening a first and second separating fence extending rearward transversely of the feeding fence and adapted to allow only one animal at a time therebetween, and the first and second receiver are placed at rearward directed sides of the respective separating fences. The separating fences prevent animals from pushing each other away in order to reach an opened passage opening. Not only can an animal thus be recognized, it is also possible to establish that the recognized animal is standing with its head between the two separating fences associated with a passage opening.

In an embodiment the feeding fence assembly further comprises a spraying device which is adapted to spray a liquid with flavourings and/or other additives, such as medicines, onto selected parts of fodder lying in front of the feeding fence. The fodder placed in front of the feeding fence comprises tasty and less tasty portions, depending for instance on conditions during harvesting of the fodder, the length of time the fodder has already been in the stall, and the extent to which the fodder has been consumed. The less tasty fodder is avoided by the animals, whereby portions of the fodder are not eaten, and fodder is lost. It also occurs that portions of the fodder are not consumed uniformly parallel to the feeding fence, whereby keeping the feeding fence an optimal distance from the fodder is made more difficult. These problems are at least partially solved by spraying only the less tasty portions of the fodder with flavourings.

In an embodiment the spraying device is mounted on the frame. The spraying device thus co-displaces with the frame when the frame is moved relative to the fodder.

The spraying device preferably comprises a plurality of spray heads which are placed at different passage openings. These spray heads can preferably be individually targeted and/or controlled and/or switched off per spray head in order to thus spray the selected parts of the fodder with flavourings. Selecting which portions of fodder must be sprayed and to what extent is preferably made on the basis of a measured distance between a portion of fodder and the frame, the tastiness and/or freshness of the fodder and/or known preference of an animal or group of animals gaining access to the portion of fodder. Animals are thus encouraged to eat the fodder more uniformly.

In an embodiment the spraying device is connected to the control device, wherein the control device is adapted to spray fodder immediately before the fodder is taken up by an animal so that the flavourings and/or other additives do not spoil or evaporate. The spraying can thus take place for instance when an animal is detected moving toward an opened passage opening.

In an embodiment the control device is adapted to control the spraying device in order to spray additives and/or medicines on the fodder on the basis of an animal recognized with the animal recognition means. Additives and/or medicines can thus be added per animal to the fodder.

There is also provided, but not according to the invention, a feeding fence assembly comprising a displaceable elongate frame, a feeding fence arranged on the frame and having a number of passage openings for the head of an animal, support and guide means connected to frame which support and guide the frame such that it can be displaced transversely of its longitudinal direction forward and backward through a stroke length over a floor surface, characterized in that the feeding fence assembly further comprises a linear actuator for driving movement of the frame along the stroke length, which actuator is connected at one outer end to an underside of the frame and is connected at another outer end to a base fixedly connected to the floor, such that the linear actuator is oriented substantially diagonally relative to the floor.

There is also provided, but not according to the invention, a feeding fence assembly comprising an elongate frame, a feeding fence arranged on the frame and having a number of passage openings for the head of an animal, wherein the frame is provided with a fodder detector adapted to detect fodder on the front side of the frame at a predetermined distance from the passage openings, further comprising a drive for displacing the frame relative to the fodder and a control device for controlling the drive for the purpose of driving movement of the frame on the basis of whether fodder has been detected at the predetermined distance from the feeding fence.

There is also provided, but not according to the invention, a feeding fence assembly comprising an elongate frame, a feeding fence arranged on the frame and having a number of passage openings for the head of an animal, wherein each of the passage openings is provided with a closing mechanism which can be set in an open position, in which it leaves the passage opening substantially open, and in a closed position in which it substantially closes the passage opening, wherein the feeding fence assembly further comprises animal recognition means which are coupled to a control device, wherein the animal recognition means are adapted to recognize animals at a distance from a passage opening, wherein the control device is adapted to control the closing mechanism at a passage opening for movement to the open or closed position on the basis of the animal recognized by the animal recognition means before the recognized animal reaches the passage opening.

There is also provided, but not according to the invention, a feeding fence assembly comprising an elongate frame, a feeding fence arranged on the frame and having a number of passage openings for the head of an animal, and a spraying device adapted to spray a liquid with flavourings and/or other additives, such as medicines, onto selected parts of fodder lying in front of the feeding fence.

There is also provided, but not according to the invention, a method for feeding animals making use of a feeding fence assembly comprising an elongate frame, a feeding fence arranged on the frame and having a number of passage openings for the head of an animal, wherein each of the passage openings is provided with a closing mechanism which can be set in an open position, in which it leaves the passage opening substantially open, and in a closed position in which it substantially closes the passage opening, further comprising a plurality of fodder detectors associated with the passage openings and adapted to detect fodder on the front side of the frame at predetermined distances from the passage openings, wherein the method comprises of: detecting fodder in front of one or more of the passage openings using one or more fodder detectors associated therewith, optionally closing a passage opening with the closing mechanism depending on whether fodder has been detected at this passage opening. In an embodiment those passage openings in front of which no fodder is detected are always closed. The fodder is thus consumed along a line substantially parallel to the frame. When the fodder detectors comprise distance measuring means, those passage openings at which the distance to the fodder is relatively great compared to the distances of the fodder from the other passage openings are preferably always closed.

There is also provided, but not according to the invention, a method for feeding animals making use of a feeding fence with a number of passage openings for the head of an animal, wherein each of the passage openings is provided with a closing mechanism which can be set in an open position, in which it leaves the passage opening substantially open, and in a closed position in which it substantially closes the passage opening, wherein the method comprises of: recognizing an animal using the animal recognition means before it reaches a passage opening with its head, retrieving previous eating behaviour of the recognized animal from a database, and optionally closing the passage opening by means of the closing mechanism subject to the previous eating behaviour of the recognized animal. The previous eating behaviour of the animal is preferably derived from previous access of the animal to fodder. A feeding frequency per animal can thus be set with the method so that the animals gain access to the fodder a predetermined number of times per twenty-four hour period. One of the above described feeding fence assemblies is preferably used in performing of the method.

In an embodiment the method further comprises the step of updating the database when the recognized animal has gained access to fodder lying in front of the passage opening and/or has placed its head through the passage opening. The eating behaviour is thus tracked per animal so that the access to passage openings can be selectively adjusted. The eating behaviour of animals can also be reviewed using the data so that extra attention can be paid to animals with aberrant eating behaviour, for instance due to disease.

In an embodiment different types of fodder are placed in front of at least two passage openings. The access to the different types of fodder can thus be set per animal such that the animal takes up a desired ratio of different types of fodder.

In an embodiment the assembly further comprises a spraying device adapted to spray a liquid with flavourings and/or other additives such as medicines on selected parts of fodder lying in front of the feeding fence, and the method further comprises of spraying fodder lying in front of a passage opening with a liquid using the spraying device when the recognized animal has gained access to this fodder, wherein the liquid comprises flavourings and/or other additives such as medicines. The liquid can thus be taken up by an animal immediately after the liquid has been sprayed onto the fodder, so that loss of the liquid due to evaporation thereof is prevented. The fodder can thus also be flavoured per recognized animal and/or other additives can be added to the fodder per recognized animal.

The aspects and measures described in this description and claims of the application and/or shown in the drawings of this application can, where possible, also be applied separately of each other. These separate aspects, such as folding the mat onto itself in a plurality of loops, adjusting access to a passage opening on the basis of recognition of an animal, adjusting access to a passage opening on the basis of whether fodder is detected at a predetermined distance from this passage opening, and selectively spraying parts of fodder with flavourings, and other aspects, can be the subject of divisional patent applications relating thereto. This is particularly the case for the measures and aspects described per se in the dependent claims.

### BRIEF DESCRIPTION OF THE DRAWINGS

The invention will be elucidated on the basis of a number of exemplary embodiments shown in the accompanying drawings.
Figures 1A and 1B show a perspective view of a feeding fence assembly according to the invention,
figures 2A, 2B, 2C show a cross-sectional view of a frame of a feeding fence assembly according to the invention, wherein the frame is placed in different positions along the stroke length,
figures 3A and 3B show a schematic top view and a side view of a frame and a base of a feeding fence assembly according to the invention,
figure 4 shows a detail of a locking mechanism placed at an outer end of the support and guide means of the frame in an embodiment of the invention,
figures 5A and 5B show a side view of a feeding fence assembly according to the invention with the frame in the moved back position,
figure 5C shows a side view of the same feeding fence assembly with the frame in the advanced position,
figure 5D shows a view of a base and a drive along line V-V in figure 5C.

### DETAILED DESCRIPTION OF THE DRAWINGS

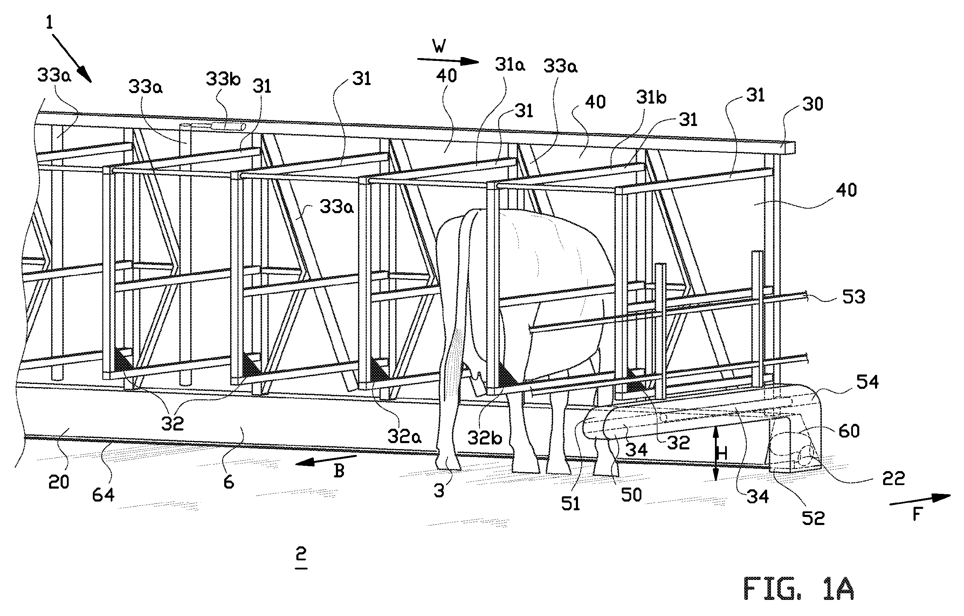

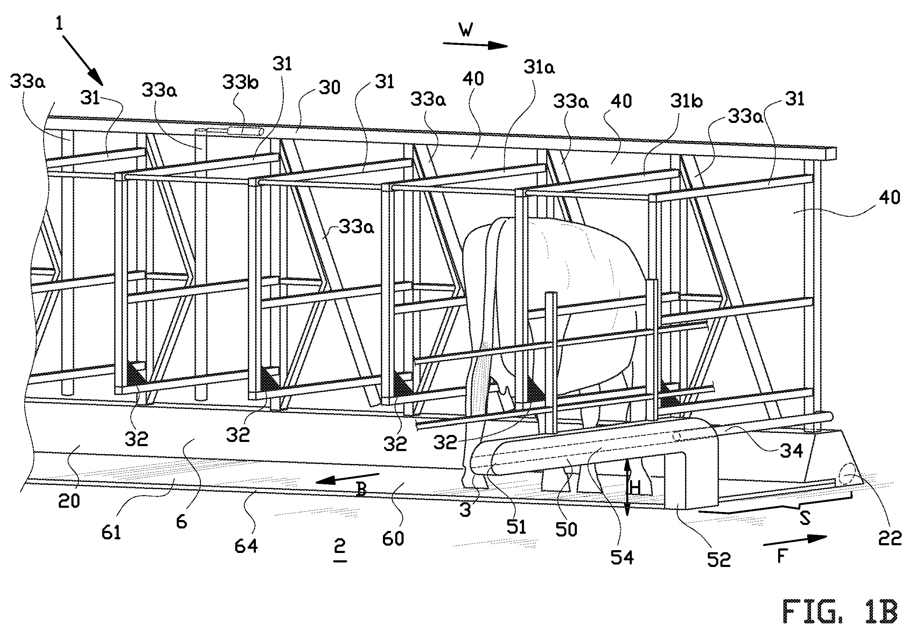

Feeding fence assembly 1 shown in figures 1A and 1B comprises a frame 20 which is movable transversely of its longitudinal direction W and the rear side 6 of which is visible. Arranged on this frame 20 is a feeding fence 30 extending in the longitudinal direction of frame 20 and having a number of passage openings 40 for the head of an animal 3. Compacted bulk fodder, such as silage blocks, is arranged in front of feeding fence assembly 1 during use. The animals can eat this fodder by placing their head through passage openings 40. As the fodder is consumed, frame 20 is displaced toward the fodder in the direction F transversely of the longitudinal direction of the frame L so that the fodder remains within reach of the cattle. The displacement of frame 20 can take place in that the cattle themselves push fence frame 20 forward. Another possibility is that feeding fence assembly 1 is provided with its own drive, with which frame 20 can be displaced. When all the fodder has been consumed, frame 20 is displaced back in the direction B and a fresh quantity of bulk fodder is arranged. The cycle is then repeated.

Feeding fence 30 comprises a number of separating fences 31 extending rearward transversely of the longitudinal direction W of frame 20 so that each passage opening 40 is placed between two of the separating fences 31 and only one animal 3 at a time can stand between two separating fences 31 immediately adjacent each other in order to place its head through a passage opening. Placed in each passage opening 40 of feeding fence 30 is a closing mechanism 33 which is movable to a first position, in which it substantially closes access to passage opening 40, and to a second position in which this access to the passage opening is left substantially clear. Such a closing mechanism is described in more detail in the European patent EP 0522665. In the shown embodiment the closing mechanism comprises a swivel bar 33a which can be set in a closed position by means of an air cylinder 33b mounted in the feeding fence, as shown at the left-hand passage opening, or in an open position as shown at the passage opening through which animal 3 places its head. Placed on a side of separating fence 31 remote from feeding fence 30 are animal recognition means 32, formed in this case by receivers 32a,32b for receiving a radio signal which identifies an animal, for instance transmitted by an RFID chip present in an ear tag of the animal or by a transmitter arranged in a collar of the animal. When the animal 3 wishes to move from a free space in the stall to a passage opening 40, the signal coming from the animal is strongest at the two receivers 32a,32b of separating fences 31a,31b associated with a specific passage opening, so that it is possible on the basis of signals received at two receivers to establish whether a determined animal wishes to move to a determined passage opening. Because receivers 32a,32b are disposed on the rear side of the separating fences on either side of each passage opening 40, it is possible to determine not only that an animal is present in the vicinity of a receiver, but also that the animal is situated between two mutually adjacent receivers 32a,32b. When this is the case, it is determined on the basis of the recognized animal whether the closing mechanism 33 associated with passage opening 40 opens or remains closed, so that the access to the fodder can be set per animal 3 or group of animals. It has been found that for recognition of cows it is best to place animal recognition means 32 at a distance of about 60 cm from passage opening 40 in feeding fence 30. The frame is supported at a front side 7 on floor surface 2 by wheels 22.

Feeding fence assembly 1 comprises on either side of the movable frame 20 a base 50 on which are mounted end fences 53 which prevent animals from walking round the side of frame 20 toward the fodder. This base 50 is mounted fixedly relative to floor surface 2 so that, when the frame is moved, the frame 20 moves relative to the base. Base 50 comprises a lower part 52 in contact with floor 2 and a higher part 51 which is suspended substantially freely at a distance H from the floor and extends rearward in direction B. Frame 20 is fixedly connected to support and guide means, formed here by an arm 34, which are at least partly received for sliding in a guide 54 in higher part 51 of base 50. Support and guide means 34 support a part of the weight resting on frame 20 and guide the frame transversely of the longitudinal direction W of the frame during movement thereof.

Frame 20 divides floor surface 2 into a part which is located in front of the frame and on which the fodder lies and a part located behind the frame, behind which the cattle are located.

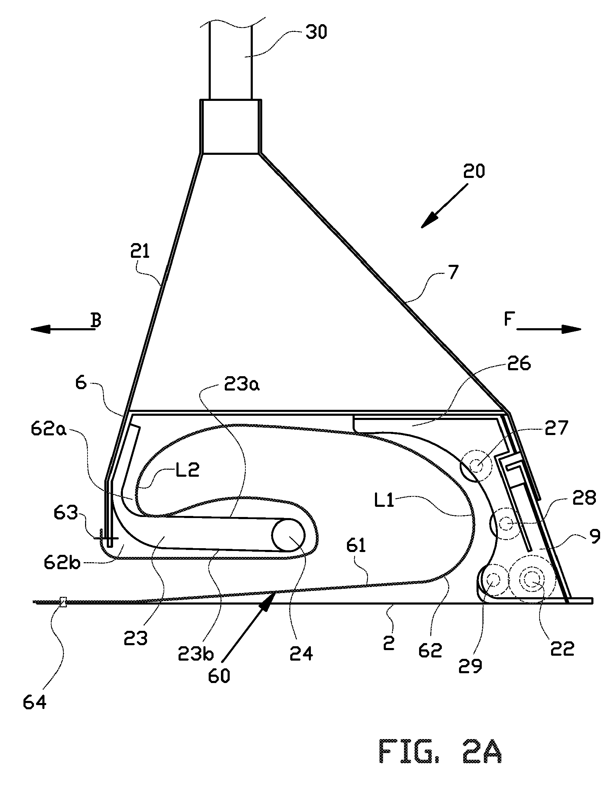

It will be apparent that in the fully advanced position shown in figure 1B the cattle stand on a part of the floor surface on which fodder is arranged in the fully moved back position of figure 1A. According to the first aspect of the invention, this floor part is covered with a mat 60 in order to prevent it being contaminated with manure. It has been found that the cattle have an aversion to fodder lying on a floor surface dirtied with manure. The take-up of food is enhanced by preventing this contamination. Mat 60 is of a flexible material, for instance of rubber, and is connected with a longitudinal edge 63 as shown in figure 2A to frame 20. An opposite longitudinal edge 64 is connected fixedly to floor 2. Mat 60 thus forms a liquid-tight separation between the fodder passageway where the fodder lies and the manure passageway where the cattle are located. Upper side 61 of mat 60 can be contaminated here when animals stand thereon.

Figure 2A shows a cross-section of frame 20 when it is in the moved back position and mat 60 is folded up substantially inside frame 20. Mat 60 is attached with a longitudinal edge 64 to floor 2 and attached with an opposite longitudinal edge 63 to the rear side of frame 20. The length of the stroke S which can be performed by the frame is defined by the difference in length of the mat covering the floor part when the frame is in the fully moved back position and when the frame is in the fully advanced position. This length is preferably chosen such that an animal which places its head through a passage opening can just still stand with its hind legs on the mat when the frame is in the advanced position.

Frame 20 is provided on a rear side 6 with a supporting wall 23. The supporting wall has an upper side 23a which extends substantially parallel to floor surface 2 inside frame 20 and which is adapted to support mat 60 in the shown folded situation. Supporting wall 23 further has an underside 23b which, at least during movement of the frame to the moved back position, prevents the part of mat 60 lying under the underside 23b of the supporting wall from bulging. A roller 24 placed between underside 23b and upper side 23a facilitates folding and unfolding of mat 60. Mat 60 has an underside 62 which, at least in extended state, faces toward the floor and an upper side 61 facing away therefrom. During folding or unfolding of mat 60 these sides do not come into contact with each other, so that floor 2 and underside 62 of mat 60 are not contaminated by upper side 61 of mat 60. The mat is folded into two open loops L1,L2 and two layers of the mat lie above upper side 23a of supporting wall 23. Owing to these loops a greater stroke length is achieved when the mat is unfolded.

Mat guiding means in the form of a guide wall 26 and rollers 27,28,29 are mounted on front side 7 of the frame and inside the frame. Mat guiding means 26,27,28,29 are adapted to guide a loop L2 of mat 60 to the interior of the frame, in particular in the direction of supporting wall 23, when the frame is displaced to the moved back position or to the advanced position. Supporting wall 23 preferably extends over the length of frame 20, but can also comprise recesses or be constructed from different, optionally adjacent parts. The frame is at least partially supported by wheels 22 which are in contact with floor 2, both during movement of frame 20 and when the frame is not moving. Wheels 22 are not driven, so that slipping of the wheels over the floor does not affect the movement of the frame, or does so to only very limited extent.

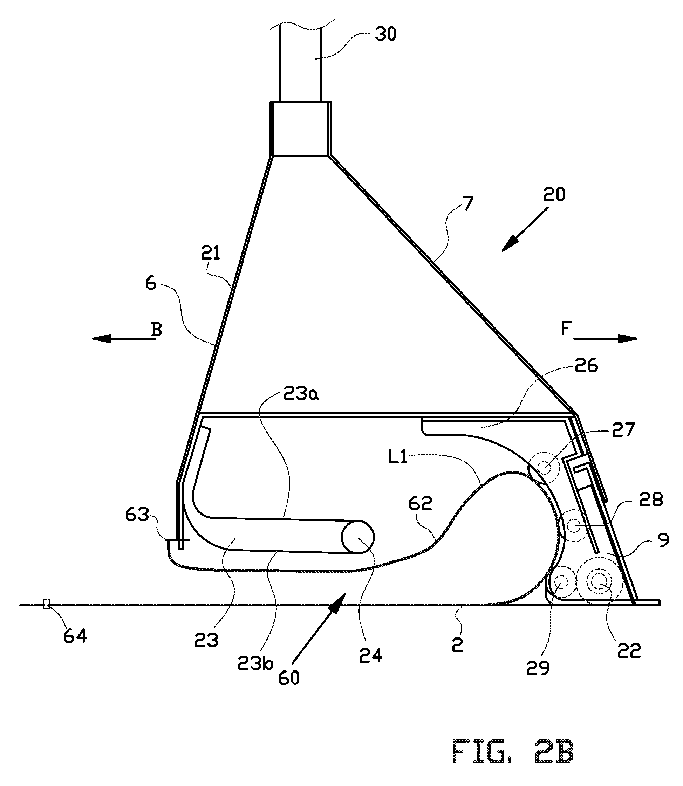

Figure 2B shows a cross-section of frame 20 of figure 2A in a position between the fully moved back and the fully advanced position. Loop L2 of figure 2A is unfolded so that a larger part of the floor surface is covered by mat 60. The unfolding of loop L1 is facilitated by rollers 27,28,29 at guide wall 26.

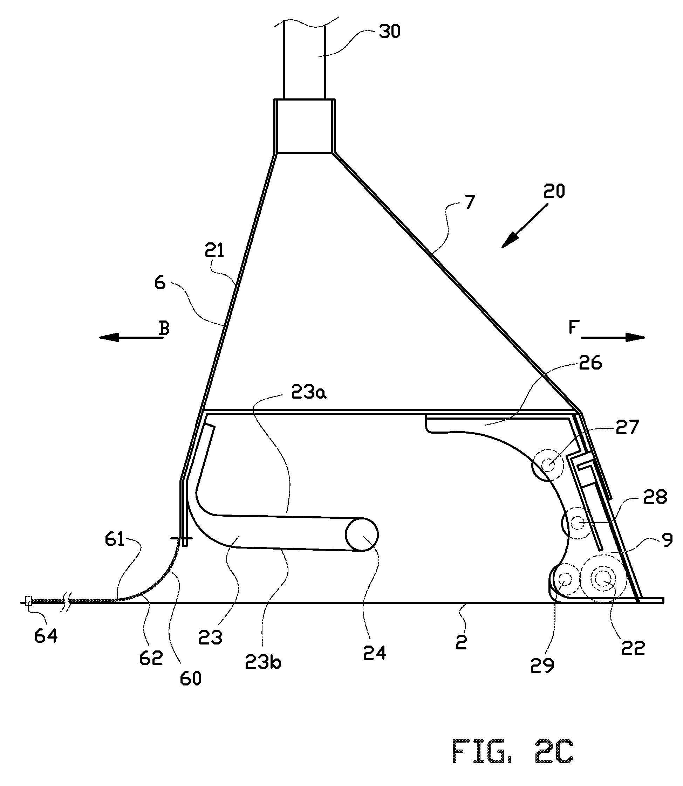

Figure 2C shows the frame in the fully advanced position, wherein mat 60 covers floor 2 on rear side 6 of frame 20 over substantially the whole stroke length.

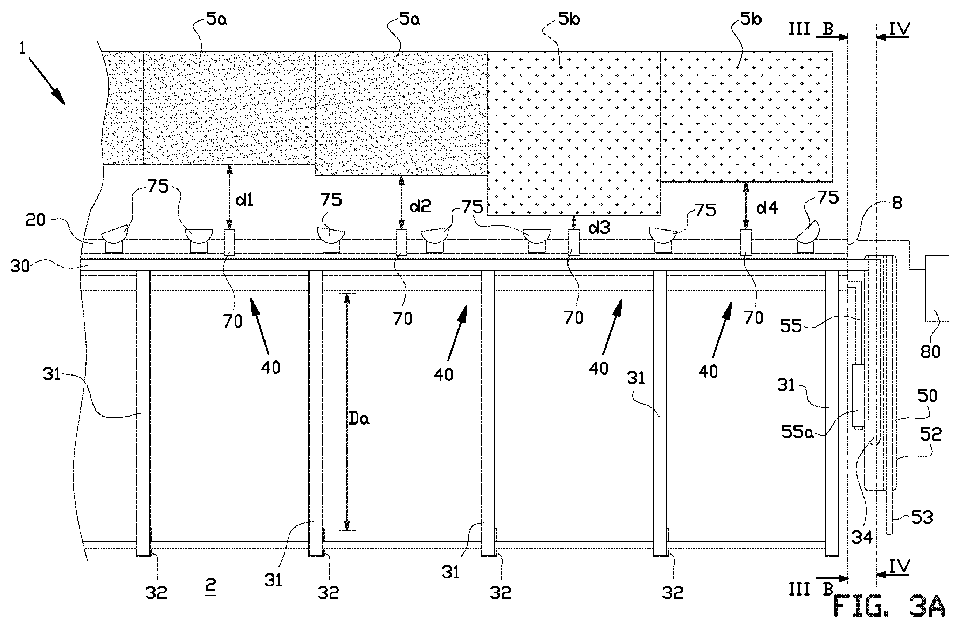

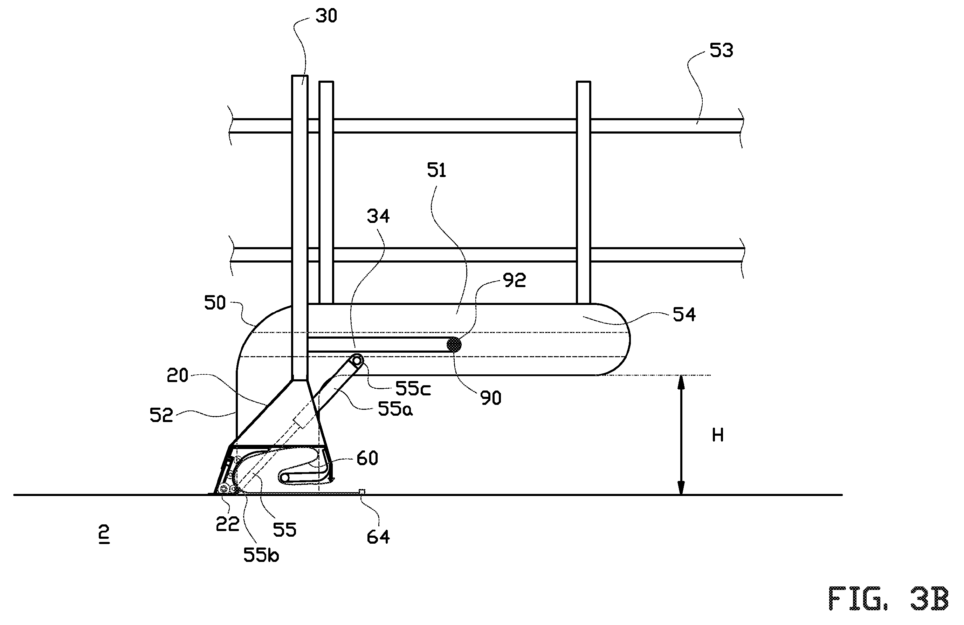

Figures 3A and 3B show respectively a top view and side view through line IIIB of a feeding fence assembly 1 according to the invention in the moved back position, and further provided with a drive 55 which is adapted to drive movement of frame 20 over the floor along the stroke direction F,B. Placed on the front side of displaceable frame 20 are different types of fodder 5a,5b which animals can eat when closing mechanism 33 is opened. Base 50 placed on an end surface 8 of frame 20 is connected fixedly to floor 2 and provided on an upper side 51 with a drive 55, here in the form of a linear cylinder 55. An arm 34 is fixedly connected to end surface 8 of frame 20 and is at least partially received for sliding in the higher part 51 of base 50 so that arm 34 together with the base supports part of the weight resting on the frame, and guides frame 20 transversely of the longitudinal direction of the frame during movement thereof.

Drive 55, also linear actuator, is connected at an outer end 55b to an underside of frame 20 and connected at an opposite outer end 55c to the higher part of base 50 so that cylinder 55 is oriented substantially diagonally relative to the floor surface as seen from the side as shown in figure 3B. Drive part 55a of cylinder 55 is placed a distance from floor surface 2 and contaminants possibly present thereon, so that the drive need only be cleaned sporadically. Cylinder 55 is connected to a control device 80 adapted to switch drive 55 on or off. When a forward movement of the frame is driven by the animals, drive 55, when switched on, need only drive a movement of frame 20 to the moved back position. Alternatively, control device 80 controls drive 55, when it is switched on, in order to drive movement of frame 20 to the moved back and/or to the advanced position. The underside 52 of base 50 has a small footprint on floor surface 2, while upper side 51 of the base, when projected onto floor surface 2, has a considerably greater surface area. A free space with a height H is thus formed between the part of the base overhanging to the rear and the floor surface, so that for instance a manure robot with a height less than H can move under the overhanging part 51 over the full width of the manure passageway behind movable frame 20. In the shown embodiment the height H is 55 cm.

Arranged in arm 34 is a locking mechanism 90 which is adapted to engage on base 55 in order to lock support and guide arm 34 in a fixed position when the frame may not be moved.

Placed on the front side 7 of frame 20 are different types of fodder 5a,5b which are accessible from different passage openings 40 so that a desired type of fodder can be supplied per animal or group of animals by opening or closing a passage opening 40 using its closing mechanism 33 on the basis of the recognition by the animal recognition means. Animal recognition means 32 are connected to control device 80 for the purpose of providing animal recognition signals thereto, and closing mechanisms 33 are connected to the control device for the purpose of receiving therefrom a control signal which depends on the animal recognition signals. Feeding fence assembly 1 further comprises on its front side a number of fodder detectors in the form of distance measuring means 70 which are adapted to determine a distance d1,d2,d3,d4 between feeding fence 30 and the fodder placed in front of it. When 75% of the distance measuring means indicate that no fodder lies within a predetermined desired distance from the feeding fence, control device 80 controls locking mechanisms 90 in base 50 in order to unlock the support and guide means, and control device 80 controls linear cylinders 55 in order to displace the frame. Particularly in combination with selective access to passage openings 40, frame 20 can thus always be placed an optimal distance from fodder 5a,5b.

Feeding fence assembly 1 further comprises a spraying device comprising a number of spray heads 75 mounted on the feeding fence and adapted to selectively spray flavourings and/or other additives on parts of the fodder 5a,5b when a recognized animal gains access to a passage opening 40. Control device 80 individually controls the spray heads 75 connected thereto in order to selectively spray portions of fodder 5a,5b lying in front of them with flavourings so that spray heads 75 can be placed in mutually differing positions and/or several of the spray heads can be deactivated. The quantity of spray liquid sprayed per spray head is for instance determined on the basis of distance d1,d2,d3,d4 measured by a distance measuring means 70 placed close to the spray head, preferences of the animal 3 standing at passage opening 40, freshness of the fodder, and so on. Applying such individually controllable spray heads 75 can ensure that the fodder is consumed more evenly parallel to frame 20, even if no closing mechanisms 33 are used for the passage openings or they are unavailable. Loss of flavourings through evaporation thereof into the air and/or through the ageing process is substantially prevented by spraying the fodder shortly before a recognized animal can place its head through a passage opening 40.

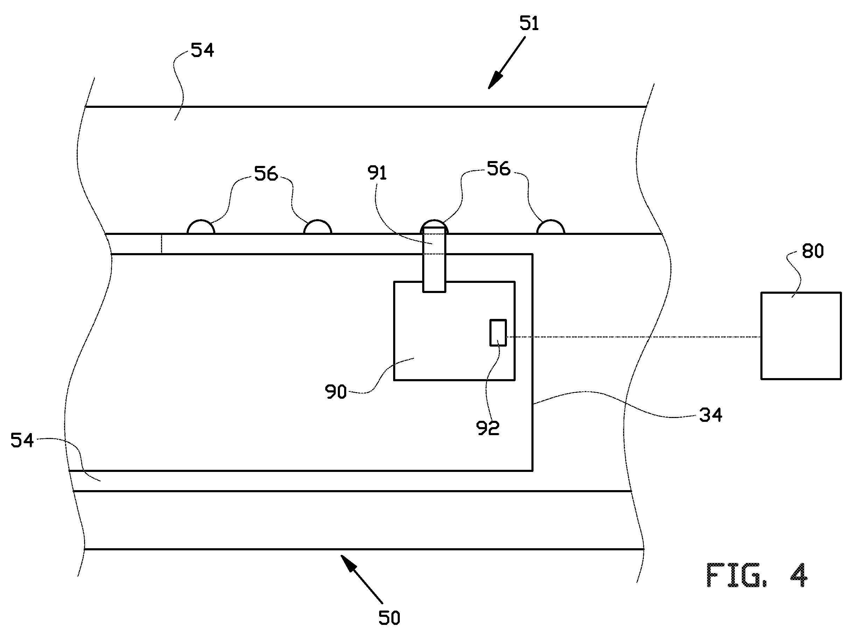

Figure 4 shows a detail of a cross-section through line IV of figure 3A, having therein a locking mechanism 90 for locking the support and guide means in the form of an arm 34 relative to a base 50 mounted fixedly on the floor. Arm 34, which is fixedly connected to the feeding fence (not shown) of the frame, is provided on its outer end with a locking mechanism 90. Base 50 comprises a tube guide 54 for receiving the arm movably therein, which tube guide 54 is provided in its longitudinal direction with a number of holes 56 which each define a position in which arm 34 can be locked. Control device 80 is adapted to control the locking mechanism to move a pin 91 of the locking mechanism into a hole 56 of tube guide 54 so that arm 34 is locked in tube guide 54, or to move pin 91 out of hole 56 so that arm 34, and therefore also frame 20, can move along the stroke direction. Locking mechanism 90 further comprises a sensor 92 adapted to determine the position of arm 34 relative to the locking mechanism, for instance by counting the number of holes 56 moving along in a direction under mechanism 90. The determined position of arm 34 is fed back to control device 80 so that possible further drives, for instance on both end surfaces of the feeding fence assembly, can be aligned relative to each other.

When animals push frame 20 forward in the direction F the forward directed force is transferred substantially via pin 91 onto base 50; loading of a possible drive, such as a linear cylinder 55, is thus prevented. Arm 34 is arranged slidably in a tube guide 54 of base 50 such that a force on the frame directed toward floor 2 is transferred at least partially via arm 34 to base 50.

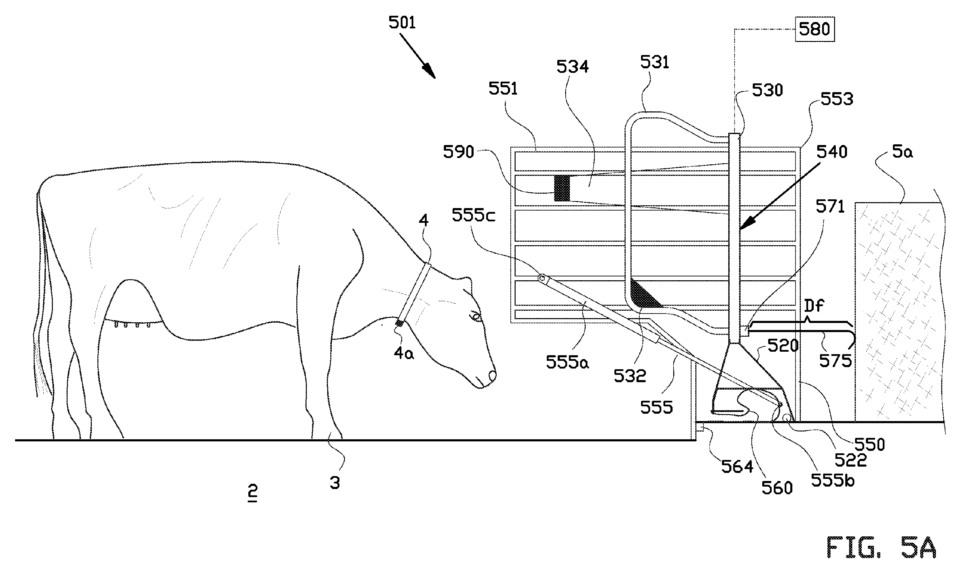

Figure 5A shows a side view of a preferred embodiment of a feeding fence assembly 501 according to the invention, placed in the moved back position in which a mat 560 is folded into a double loop substantially inside a frame 520. Frame 520 comprises wheels 522 for supporting the frame at least partially on floor 2 and for rolling the frame over the floor. Frame 520 comprises a feeding fence 530 on which support and guide means in the form of an arm 534 are mounted, which arm 534 extends rearward transversely of feeding fence 530. Frame 520 is provided with a number of separating fences 531 which mutually separate passage openings 540 present in the feeding fence and extend rearward transversely of frame 520. Arranged at each passage opening 540 is a closing mechanism 533 which can be set to leave passage opening 540 substantially open or to close it to an animal. Separating fences 531 are provided on a rear side with animal recognition means, in this case radio receivers 532, with which an animal, in this case a cow 3, can be recognized even before it reaches a passage opening 540 with its head. Cow 3 has around its neck a collar 4 with a transmitter 4a which is adapted to generate a signal identifying this cow 3, to be received by animal recognition means 532.

The assembly further comprises a base 550 which is connected fixedly to floor 2 and comprises a guide 554 for movably receiving arm 534 of the frame therebetween. Base 550 comprises an end fence 553 which forms a higher part 551 of the base and extends rearward suspended at least partially freely above floor 2. The lower part 552 of the base in contact with the floor has a proportionally smaller footprint, so that a manure robot or manure scraper can move through under the freely suspended part of end fence 553.

Assembly 501 further comprises a drive in the form of a linear cylinder 555 which is connected at an outer end 555c to a part, located to the rear, of higher part 551 of the base and connected at another outer end 555b to an underside of frame 520, in line with the axis of wheel 522. Linear actuator 555 is thus oriented substantially diagonally relative to floor 2 in both the moved back position of the frame and in the advanced position of frame 520, so that the passage under the part 551 of the base suspended freely of the floor is substantially not blocked by linear cylinder 555.

Arm 534 of frame 520 is provided on its rear side with a locking mechanism 590 which is adapted to engage on end fence 553 in order to lock frame 520 in a position. Locking mechanism 590 is adapted to substantially absorb pressure exerted on the fence by animals so that linear cylinder 555 is relieved of pressure.

The frame is further provided with a fodder detector 571 mounted on feeding fence 530 at a passage opening 540 and comprising a substantially horizontally disposed rod 575 with a horizontal length Df. When the rod is pressed against fodder 5a, pressure is exerted on rod 575 and this is detected by fodder detector 571. When no pressure is exerted on rod 575, there is then no fodder present within the length Df from the passage opening. In this case the control device can control actuator 555 to displace the frame forward.

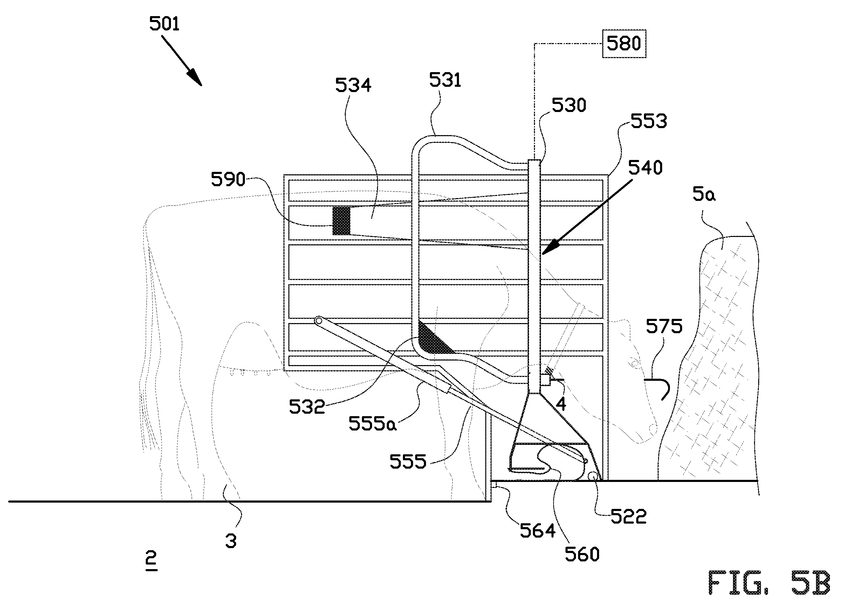

Figure 5B shows the same feeding fence assembly 501, wherein animal 3 places its head through passage opening 540 to be able to get to the fodder.

In order to reach passage opening 540 the animal with its collar 4 and transmitter 4a attached thereto has passed two animal recognition means 532. After receiving animal identification signals from two receivers 532 associated with a passage opening 540, control device 580 has opened the closing mechanism of passage opening 540 in order to give animal 3 access to fodder 5a.

After a time the animals consume the fodder 5 placed in front of the feeding fence so that frame 520 must be moved forward in order to place the fodder within reach of the animals.

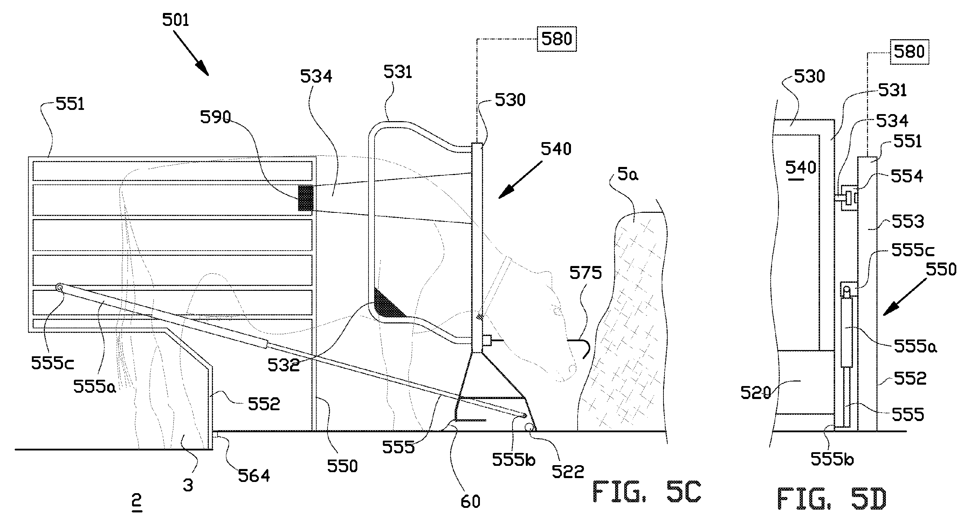

In figure 5C the linear cylinder 555 is extended so that frame 520 is in the advanced position and fodder 5a lies within reach of animal 3. Cylinder 555 is oriented diagonally relative to floor surface 2 and leaves free the space under the overhanging part 551 of base 550. Animal 3 stands on the unfolded mat 560 at a position on floor 2 where fodder was previously present.

Figure 5D shows a rear view in more detail of the placing of linear cylinder 555 and support and guide means 534. Drive part 555b of cylinder 55 is connected pivotally to base 550 and placed higher than the part of the cylinder which is connected pivotally to the frame at the position of wheels 522. Drive part 555b thus remains a distance from floor 2 and any contamination which may be present thereon. The support and guide means 534 which protrude rearward from feeding fence 530 of frame 520 are received movably in guide 554 of end fence 553. The locking mechanism 590 mounted on support and guide means 534 is adapted to engage on this guide 554 in order to lock frame 520 in a position.

The above description is included for the purpose of illustrating the operation of preferred embodiments of the invention and not to limit the scope of the invention. On the basis of the above elucidation many variations which fall within the scope of the present invention will be evident to a skilled person.

## Claims

1. Feeding fence assembly (1) comprising a displaceable elongate frame (20), a feeding fence (30) arranged on the frame and having a number of passage openings (40) for the head of an animal (3),
wherein the feeding fence assembly further comprises support and guide means (34) connected to the frame which support and guide the frame (20) such that it can be displaced transversely of its longitudinal direction (W) forward (F) and back (B) through a stroke length (S) over a floor surface (2), a mat (60) of flexible material which is connected with a first longitudinal edge (63) to the frame (20) over the length of the feeding fence (30) and which is connected with an opposite, second longitudinal edge (64) to the floor (2) such that, when the frame (2) is in fully advanced position, the mat (60) extends rearward from the frame (20),
wherein the mat (60) in extended state has an underside (62) facing toward the floor surface (2) and an upper side (61) facing away therefrom, and
wherein at least in the fully moved back position the mat (60) is folded with at least two loops (L1,L2) inside the frame (20),
**characterized in that** at least in the fully moved back position the mat (60) is folded back onto itself and that the frame (20) further comprises a supporting wall (23) arranged inside the frame and having an upper side (23a) facing away from the floor surface (2), wherein the upper side (23a) of the supporting wall (23) is adapted to support the mat (60) on the underside (62) of the mat, in particular to support a loop (L2) of the mat.

2. Feeding fence assembly as claimed in claim 1, wherein the upper side (23a) of the supporting wall (23) extends substantially parallel to the floor surface (2).

3. Feeding fence assembly as claimed in claim 1 or claim 2, wherein the supporting wall (23) is arranged inside the frame at a rear side (6) of the frame.

4. Feeding fence assembly as claimed in any of the claims 1-3, wherein the supporting wall (23) lies, at least when the frame (20) is in the fully moved back position, between two parts of the mat (60) facing with their underside (62a, 62b) directly toward the supporting wall (23).

5. Feeding fence assembly as claimed in any of the foregoing claims, further provided with mat guiding means (26,27,28,29) which are mounted on the frame (20) and adapted to guide a loop (L1) of the mat (60) away from the floor (2) during displacement of the frame to the moved back position.

6. Feeding fence assembly as claimed in claim 5, wherein the mat guiding means (26,27,28,29) are mounted inside the frame on a front side (7) of the frame.

7. Feeding fence assembly as claimed in any of the foregoing claims, wherein a first part of the underside (62) of the mat (60) comes into contact with an opposite, second part of the underside (62) of the mat (60) when the frame (20) is placed at least partially in the moved back position.

8. Feeding fence assembly as claimed in any of the foregoing claims, further comprising a base (50) which is fixedly connected to the floor (2) and disposed on an end surface (8) of the frame (20), wherein the support and guide means (34) are connected movably to the base (50) and wherein the frame (20) is connected non-translatably to the support and guide means (34).

9. Feeding fence assembly as claimed in claim 8, wherein the base (50) is provided on its upper side with an end fence (53).

10. Feeding fence assembly as claimed in claim 8 or claim 9, wherein the base (50) comprises a lower part (52) in contact with the floor and a higher part (51) extending rearward along the stroke direction and suspended substantially freely above the floor (2).

11. Feeding fence assembly as claimed in claim 10, wherein the support and guide means (34) are mounted movably on the higher part (51) of the base (50).

12. Feeding fence assembly as claimed in any of the foregoing claims, wherein the support and guide means (34) comprise a locking mechanism (90) for engaging on the base (50) in order to lock the frame (20) in a position along the stroke length (S).

## Patentansprüche

1. Weidezaunanordnung (1) mit einem verschiebbaren länglichen Rahmen (20), einem Weidezaun (30), der auf dem Rahmen angeordnet ist und eine Anzahl von Durchtrittsöffnungen (40) für den Kopf eines Tieres (3) aufweist,
wobei die Weidezaunanordnung ferner Stütz- und Führungsmittel (34) umfasst, die mit dem Rahmen verbunden sind, welche den Rahmen (20) derart stützen und führen, dass er quer zu seiner Längsrichtung (W) nach vorne (F) und zurück (B) über eine Bodenfläche (2) um eine Hublänge (S) verschiebbar ist und eine Matte (60) aus flexiblem Material aufweist, die mit einer ersten Längskante (63) mit dem Rahmen (20),
über die Länge des Weidezaunes (30) verbunden ist und mit einer gegenüberliegenden zweiten Längskante (64) mit dem Boden (2) verbunden ist, so dass wenn der Rahmen (2) in vollständig vorgeschobener Position ist, die Matte (60) sich von dem Rahmen (20) nach hinten erstreckt,
wobei die Matte (60) im ausgefahrenen Zustand eine Unterseite (62) hat, die der Bodenfläche (2) zugewandt ist, und eine Oberseite (61) hat, die von ihr wegweist und wobei zumindest in der vollständig zurückbewegten Position die Matte (60) mit mindestens zwei Windungen (L1, L2) innerhalb des Rahmens (20) zusammengefaltet ist,
**dadurch gekennzeichnet, dass** zumindest in der vollständig zurückbewegten Position die Matte (60) auf sich selbst zurückgefaltet ist und der Rahmen (20) ferner eine Stützwand (23) aufweist, die im Inneren des Rahmens angeordnet ist und eine Oberseite (23a) umfasst, die von der Bodenfläche (2) wegweist, wobei die Oberseite (23a) der Stützwand (23) ausgebildet ist, um die Matte (60) an der Unterseite (62) der Matte zu unterstützen, insbesondere eine Windung (L2) der Matte zu unterstützen.

2. Weidezaunanordnung nach Anspruch 1, wobei die Oberseite (23a) der Stützwand (23) sich im Wesentlichen parallel (2) zu der Bodenfläche erstreckt.

3. Weidezaunanordnung nach Anspruch 1 oder Anspruch 2, wobei die Stützwand (23) innerhalb des Rahmens an einer Rückseite (6) des Rahmens angeordnet ist.

4. Weidezaunanordnung nach einem der Ansprüche 1-3, wobei die Stützwand (23) zumindest wenn der Rahmen (20) sich in der vollständig zurückbewegten Position befindet, zwischen zwei Teilen der Matte (60) liegt, die mit ihrer Unterseite (62a, 62b) direkt auf die Stützwand (23) gerichtet sind.

5. Weidezaunanordnung nach einem der vorhergehenden Ansprüche, wobei weiterhin Mattenführungsmittel (26,27,28,29) vorgesehen sind, die an dem Rahmen (20) angebracht sind und ausgebildet sind, um eine Windung (LI) der Matte (60) während des Verschiebens des Rahmens in die zurückbewegte Position weg vom Boden (2) zu führen.

6. Weidezaunanordnung nach Anspruch 5, wobei die Mattenführungsmittel (26,27,28,29) innerhalb des Rahmens an einer Vorderseite (7) des Rahmens befestigt ist.

7. Weidezaunanordnung nach einem der vorhergehenden Ansprüche, wobei ein erster Teil der Unterseite (62) der Matte (60) in Kontakt mit einem entgegengesetzten zweiten Teil der Unterseite (62) der Matte (60) kommt, wenn der Rahmen (20) zumindest teilweise in der zurückbewegt Position gebracht.

8. Weidezaunanordnung nach einem der vorhergehenden Ansprüche, weiterhin umfassend eine Basis (50), die fest mit dem Boden (2) verbunden und an einer Stirnfläche (8) des Rahmens (20) angeordnet ist, wobei die Stütz- und Führungsmittel (34) beweglich mit der Basis (50) verbunden sind und wobei der Rahmen (20) nicht translatorisch mit den Stütz- und Führungsmitteln (34) verbunden ist.

9. Weidezaunanordnung nach Anspruch 8, wobei die Basis (50) an ihrer Oberseite mit einem Endzaun (53) versehen ist.

10. Weidezaunanordnung nach Anspruch 8 oder Anspruch 9, wobei die Basis (50) einen unteren Teil (52), der in Kontakt mit dem Boden steht und einen oberen Teil (51) umfasst, der sich nach hinten entlang der Hubrichtung erstreckt und im Wesentlichen frei über dem Boden (2) aufgehängt ist.

11. Weidezaunanordnung nach Anspruch 10, wobei die Stütz- und Führungsmittel (34) beweglich an dem oberen Teil (51) der Basis befestigt sind (50).

12. Weidezaunanordnung nach einem der vorhergehenden Ansprüche, wobei die Stütz- und Führungsmittel (34) einen Verriegelungsmechanismus (90) zum Angreifen an der Basis (50) umfassen, um den Rahmen (20) in einer Position entlang Hubrichtung (S) zu blockieren.

## Revendications

1. Ensemble de barrières pour l'alimentation animale (1) comprenant un cadre allongé mobile (20), une barrière d'alimentation (30) disposée sur le cadre et comportant un certain nombre d'ouvertures de passage (40) pour la tête d'un animal (3),
dans lequel l'ensemble de barrières pour l'alimentation animale comprend en outre des moyens de support et de guidage (34) connectés au cadre et qui supportent et guident le cadre (20) de telle sorte qu'il peut être déplacé transversalement à sa direction longitudinale (W) vers l'avant (F) et vers l'arrière (B) sur une longueur de course (S) pardessus une surface de plancher (2), un tapis (60) réalisé dans un matériau flexible qui est relié au cadre (20) par un premier bord longitudinal (63) sur la longueur de la barrière d'alimentation (30) et qui est relié au plancher (2) par un second bord longitudinal (64) opposé de telle sorte que, lorsque le cadre (2) est en position totalement avancée, le tapis (60) est déployé vers l'arrière depuis le cadre (20),
dans lequel le tapis (60), à l'état déployé, présente une face inférieure (62) dirigée vers la surface de plancher (2) et une face supérieure (61) opposée à cette dernière, et
dans lequel au moins dans la position entièrement reculée, le tapis (60) est plié en formant au moins deux boucles (L1, L2) à l'intérieur du cadre (20),
**caractérisé en ce qu'**au moins dans la position entièrement reculée, le tapis (60) est replié sur lui-même et **en ce que** le cadre (20) comprend en outre une paroi support (23) disposée à l'intérieur du cadre et comportant une face supérieure (23a) opposée à la surface de plancher (2), la face supérieure (23a) de la paroi support (23) étant adaptée pour supporter le tapis (60) par la face inférieure (62) du tapis (60), en particulier pour supporter une boucle (L2) du tapis.

2. Ensemble de barrières pour l'alimentation animale selon la revendication 1, dans lequel la face supérieure (23a) de la paroi support (23) s'étend sensiblement parallèlement à la surface de plancher (2).

3. Ensemble de barrières pour l'alimentation animale selon la revendication 1 ou la revendication 2, dans lequel la paroi support (23) est disposée à l'intérieur du cadre sur une face arrière (6) du cadre.

4. Ensemble de barrières pour l'alimentation animale selon l'une quelconque des revendications 1-3, dans lequel la paroi support (23) se situe, au moins lorsque le cadre (20) se trouve dans la position entièrement reculée, entre deux parties du tapis (60) avec leurs faces inférieures (62a, 62b) dirigées directement vers la paroi support (23).

5. Ensemble de barrières pour l'alimentation animale selon l'une quelconque des revendications précédentes, lequel est en outre muni de moyens de guidage de tapis (26, 27, 28, 29) qui sont montés sur le cadre (20) et qui sont adaptés pour guider une boucle (L1) du tapis (60) à distance du plancher (2) durant le déplacement du cadre en direction de la position reculée.

6. Ensemble de barrières pour l'alimentation animale selon la revendication 5, dans lequel les moyens de guidage de tapis (26, 27, 28, 29) sont montés à l'intérieur du cadre sur une face avant (7) du cadre.

7. Ensemble de barrières pour l'alimentation animale selon l'une quelconque des revendications précédentes, dans lequel une première partie de la face inférieure (62) du tapis (60) vient en contact avec une seconde partie opposée de la face inférieure (62) du tapis (60) lorsque le cadre (20) est placé au moins partiellement dans la position reculée.

8. Ensemble de barrières pour l'alimentation animale selon l'une quelconque des revendications précédentes, comprenant en outre une base (50) qui est fixée au plancher (2) et qui est disposée à une surface d'extrémité (8) du cadre (20), les moyens de support et de guidage (34) étant reliés de façon mobile à la base (50) et le cadre (20) étant relié aux moyens de support et de guidage (34) de façon à ne pas pouvoir se translater.

9. Ensemble de barrières pour l'alimentation animale selon la revendication 8, dans lequel la base (50) est munie sur sa face supérieure d'une barrière d'extrémité (53).

10. Ensemble de barrières pour l'alimentation animale selon la revendication 8 ou la revendication 9, dans lequel la base (50) comprend une partie inférieure (52) en contact avec le plancher et une partie supérieure (51) qui s'étend vers l'arrière le long de la direction de course et qui est suspendue sensiblement librement au-dessus du plancher (2).

11. Ensemble de barrières pour l'alimentation animale selon la revendication 10, dans lequel les moyens de support et de guidage (34) sont montés de façon mobile sur la partie supérieure (51) de la base (50).

12. Ensemble de barrières pour l'alimentation animale selon l'une quelconque des revendications précédentes, dans lequel les moyens de support et de guidage (34) comprennent un mécanisme de verrouillage (90) destiné à venir en prise sur la base (50) en vue de verrouiller le cadre (20) dans une position le long de la longueur de course (S).
